# EUROPÄISCHE PATENTANMELDUNG

(11) **EP 0 807 948 A2**
(43) Veröffentlichungstag der Anmeldung: **19.11.1997**
(21) Anmeldenummer: 97107900.9
(22) Anmeldetag: 15.05.1997
(51) Int. Cl.: H01H 47/22, H02H 3/24

(54) **Auf eine abfallende Spannungsflanke ansprechende Schaltungsanordnung**

(30) Priorität: 15.05.1996 DE 19619599
(71) Anmelder: Elan Schaltelemente GmbH, D-35435 Wettenberg (DE)
(72) Erfinder: Ziegler, Olaf, Dipl.-Ing., 56379 Geilnau (DE)
(74) Vertreter: Stoffregen, Hans-Herbert, Dr. Dipl.-Phys.

(57) **Zusammenfassung**

Gegenstand der Erfindung ist eine auf eine abfallende Spannungsflanke ansprechende Schaltungsanordnung (24). Die Schaltungsanordnung enthält ein gepoltes Relais (10), dessen Spule (12) in Reihe mit einem Kondensator (14) gelegt ist. Parallel zu dieser Reihenschaltung ist ein Widerstand (16) geschaltet.

## Beschreibung

Die Erfindung bezieht sich auf eine Schaltungsanordnung, die auf eine abfallende Spannungsflanke anspricht.

Unter abfallender Spannungsflanke ist hierbei eine Spannungsänderung von einer höheren zu einer niedrigeren Spannung um einen gewissen Wert zu verstehen, der ausreicht, um eine Änderung des Zustandes eines zwei stabile Zustände aufweisenden Schaltelements zu bewirken. Die Spannungsänderung kann z.B. so groß sein wie die Nennspannung im Rahmen der Nennspannungstoleranzen des Schaltelements. Eine abfallende Spannungsflanke kann auch durch Öffnen eines Schaltkontakts in einem Stromkreis erfolgen, über den dem Schaltelement die Nennspannung zugeführt wird. Bei einer abfallenden Spannungsflanke soll beispielsweise die Schaltungsanordnung Betriebsgrößen in einem Stromkreis ändern. Solche Änderungen werden häufig aus sicherheitstechnischen Gründen verlangt. Die auf die abfallende Spannungsflanke ansprechende Schaltungsanordnung soll z.B. nach der Betätigung für eine gewisse Zeit verhindern, daß andere elektrische Stromkreise weiterhin Energie zu Arbeitsorganen liefern. Weiterhin können nach dem Ansprechen der Schaltungsanordnung andere elektrische Geräte oder Einrichtungen in einen vorgegebenen Zustand versetzt werden, in dem von ihnen keine Gefahren für Personen ausgehen.

Der Erfindung liegt nun das Problem zugrunde, eine auf eine abfallende Spannungsflanke ansprechende Schaltungsanordnung bereitzustellen, die bei Unterbrechung der Verbindung mit einem Pol einer Spannungsquelle einen Schaltzustand einnimmt, durch den weitere Schaltungsbauteile dann betätigt werden können, wenn die Schaltungsanordnung keine gestörten Schaltungsteile enthält.

Das Problem wird erfindungsgemäß dadurch gelöst, dass ein Schaltungsteil, das auf einen Strom vorgegebener Richtung einen ersten von wenigstens zwei Zuständen einnimmt, in Reihe mit einem bei einem leitenden Schaltelement von einer äußeren Spannungsquelle aufladbaren Kondensator entgegen der Richtung des Aufladestroms gepolt angeordnet ist und dass ein Entladestromkreis mit parallelem Zweig zum Kondensator und zum Schaltungsteil beim Öffnen des Schaltelements einen Strom der vorgegebenen Richtung im Schaltungsteil erzeugt, das von diesem Strom in den ersten Schaltzustand versetzt wird. Der Schaltzustand wird direkt oder indirekt von weiteren Schaltungselementen weiterverarbeitet. Bei der erfindungsgemäßen Schaltung bewirkt ein Defekt an einem Schaltungsbauteil, dass der Schaltzustand des Schaltungsteils nicht mehr auftritt, wenn das Schaltelement die Verbindung zur Spannungsquelle unterbricht. Wenn z. B. der Kondensator oder dessen Anschlußleitungen defekt sind, wird kein Entladestrom erzeugt. Liegen ein Kurzschluß oder eine Unterbrechung im Entladezweig vor, dann wird entweder der Kondensator nicht aufgeladen oder es findet wiederum keine Entladung mehr statt. Die Schaltung genügt daher hohen Sicherheitsanforderungen. Selbst bei einem Kurzschluß des Schaltelements wird das Signal nicht erzeugt, da sich der Kondensator nicht entladen kann. Die Schaltungsanordnung eignet sich daher für die Einschaltstromkreise von Arbeits- oder Kraftmaschinen, bei denen sichergestellt sein muss, dass die Einschaltung nur bei einwandfreier Arbeitsweise der Schaltungsbauteile stattfindet, d.h. eine Einschaltung aufgrund eines gestörten Bauteils vermieden werden muss. Bei einer bevorzugten Ausführungsform ist als Schaltungsteil wenigstens ein gepoltes Relais mit seiner Spule in Reihe mit dem Kondensator angeordnet, wobei zu der Reihenschaltung der Spule und des Kondensators ein Widerstand parallel geschaltet ist, und wobei die Polung des Relais derart auf die an die Reihenschaltung der Spule und des Kondensators von der äußeren Spannungsquelle anlegbare Spannung abgestimmt ist, dass der von der äußeren Spannungsquelle erzeugte Spulenstrom das Relais nicht betätigt, das bei der Kondensatorentladung betätigt wird. Das Anlegen der äußeren Spannung bewirkt bei dieser Schaltungsanordnung das Aufladen des Kondensators, ohne dass das gepolte Relais betätigt wird. Entfällt die äußere Spannung, d.h. springt die äußere Spannung von einem höheren auf einen niedrigeren Wert um einen Betrag, der der Ansprechsspannung des Relais entspricht, dann entlädt sich der Kondensator über die Spule und den Widerstand. Der durch die Spule fließende Entladestrom erzeugt ein Magnetfeld im Relais, das dem Magnetfeld des Dauermagneten entgegenwirkt, so dass der Magnetanker des Relais umschaltet. Das Relais bleibt so lange angezogen, wie der Halbstrom während der Entladung nicht unterschritten wird. Bei der vorstehend beschriebenen Schaltung reicht ein einziges gepoltes Relais aus, um bei einem Spannungssprung mit abfallender Flanke eine Relaisstellungsänderung herbeizuführen, mit der auf andere Stromkreise eingewirkt werden kann. Der schaltungstechnische Aufwand ist bei dieser Schaltung, die neben dem gepolten Relais nur noch den Kondensator und den Widerstand enthält, sehr gering. Unter gepoltem Relais ist im übrigen auch eine Halbleiterschaltung zu verstehen, mit der die Wirkungsweise eines elektromagnetischen gepolten Relais nachgebildet wird. Ist bei dieser Anordnung ein Bauteil, z.B. das Relais, der Kondensator oder der Widerstand defekt, dann spricht das Relais nicht an. Eine oder mehrere Relaiskontakte stehen für die Ansteuerung weiterer Bauteile zur Verfügung. Bei einer zweckmäßigen Ausführungsform ist als Schaltungsteil ein gepoltes Relais mit einer Leuchtdiode eines Optokopplers und mit dem Kondensator in Reihe geschaltet, wobei zu der Diode eine bezüglich der Polung der Spannungsquelle in Durchlaßrichtung gepolte Diode gelegt ist, und wobei ein Phototransistor des Optokopplers parallel an der Reihenschaltung aus Spule, Diode und Kondensator im Entladestromkreis angeordnet ist. Auch bei dieser Ausführungsform kommt es bei einem defekten Bauteil auf eine abfallende Spannungsflanke hin nicht zum Ansprechen des gepolten Relais.

Bei einer anderen zweckmäßigen Ausführungsform ist als Schaltungsteil wenigstens ein Optokoppler mit Triacausgang vorgesehen, dessen Leuchtdiode in Bezug auf die Polarität der äußeren Spannungsquelle in Sperrichtung gepolt ist, wobei parallel zur Leuchtdiode eine in Durchlaßrichtung in Bezug auf die Polarität der Spannungsquelle gepolte Diode gelegt ist und wobei ein Widerstand im Entladestromkreis angeordnet ist. Der Triacausgang steht bei dieser Anordnung für die Verbindung mit weiteren Schaltungselementen zur Verfügung. Insbesondere ist die Reihenschaltung des Kondensators und des Schaltungsteils über das als Tastschalter ausgebildete Schaltelement zwischen dem positiven und negativen Pol der äußeren Gleichspannungsquelle angeordnet. Die abfallende Spannungsflanke wird durch das Öffnen des Tastschalters erzeugt.

Vorzugsweise enthält das Relais einen Schließer, der in einer Selbsthalteschaltung mit dem einen Pol der Spannungsquelle und der Spule des Relais verbunden ist.

Bei einer weiteren bevorzugten Ausführungsform sind zwei je die Reihenschaltung eines gepolten Relais und eines Kondensators und einen zu der Reihenschaltung parallelen Widerstand aufweisender Schaltungsgruppen über je einen Schließer des Relais der jeweils anderen Schaltungsgruppe mit einem Pol eines Tastschalters verbunden, dessen anderer Pol an den einen Pol der Gleichspannungsquelle angeschlossen ist, wobei jedes Relais mit seiner Spule über einen Schließer und einen Kontakt eines Not-Aus-Schalters mit dem Pol der Gleichspannungsquelle verbunden ist, wobei die beiden Kontakte des Not-Aus-Schalters mechanisch zwangsläufig zusammen betätigbar sind und wobei Schließer der Relais in Reihe zwischen einer Spannungsquelle und einem elektrischen Verbraucher angeordnet sind. Bei dieser Ausführungsform werden die Schließer nach dem Loslassen des Tasters dann eingeschaltet, wenn kein defektes Bauteil in der Schaltung vorhanden ist. Beim Betätigen des Not-Aus-Schalters fallen die Relais ab, so dass die Schließer ausgeschaltet werden. Um den Verbraucher wieder mit Spannung nach der Not-Aus-Schalterbetätigung versorgen zu können, müssen zuerst die beiden Relais abgefallen sein. Verbraucher ist z.B. eine elektrische Maschine. Bei einer anderen zweckmäßigen Ausführungsform ist eine die Reihenschaltung eines gepolten Relais und eines Kondensators und einen zu der Reihenschaltung parallelen Widerstand aufweisende Schaltungsgruppe wenigstens über je einen Schließer zweier weiterer gepolter Relais und über einen Tastschalter mit dem einen Pol einer Spannungsquelle verbunden, wobei jeder der weiteren Relais in Reihe mit der Parallelschaltung eines eigenen Schließers und eines Schließers der Schaltungsgruppe und in Serie mit einem Kontakt eines Not-Aus-Tasters, dessen Kontakte zwangsläufig mechanisch gekoppelt sind, an die Spannungsquelle angeschlossen. Bei dieser Schaltung zieht das Relais der Schaltungsgruppe nach dem Loslassen des Tasters an, wodurch die anderen Relais an Spannung gelegt werden und in Selbsthaltung übergehen. Dabei öffnen die Schließer im Kreis des Relais der Schaltungsgruppe, so dass das Relais abfällt. Hierdurch wird eine Wischerfunktion erzeugt.

Weitere Einzelheiten, Vorteile und Merkmale der Erfindung ergeben sich nicht nur aus den Ansprüchen und den diesen zu entnehmenden Merkmalen - für sich und/oder in Kombination. - sondern auch aus der folgenden Beschreibung eines bevorzugten Ausführungsbeispiels.

Es zeigen:
- Fig.1a: ein Schaltbild einer auf eine abfallende Spannungsflanke ansprechenden Schaltungsanordnung,
- Fig. 1b: ein Schaltbild der auf eine abfallende Spannungsflanke ansprechenden Schaltungsanordnung gemäß Fig. 1 mit einem Zusatz zum Erzeugen eines Selbsthalteschaltzustands,
- Fig. 2a: ein Schaltbild einer anderen Ausführungsform einer auf eine abfallende Spannungsflanke ansprechenden Schaltungsanordnung,
- Fig. 2b: ein Schaltbild der Schaltungsanordnung gemäß Fig. 2a mit einem Zusatz zur Erzeugung eines Selbsthaltezustandes,
- Fig. 3: ein Schaltbild einer mit einem Einschalt-Taster und einem Not-Aus-Schalter versehenen Schaltungsbaugruppe für die Freigabe einer Spannungsversorgung zu einem elektrischen Verbraucher,
- Fig. 4: ein Schaltbild einer weiteren Schaltungsbaugruppe mit einem Einschalt-Taster und einem Not-Aus-Schalter für die Freigabe der Spannungsversorgung eines elektrischen Verbrauchers,
- Fig. 5: ein Schaltbild einer zusätzlichen Schaltungsbaugruppe mit einem Einschalt-Taster und einem Not-Aus-Schalter für die Freigabe der Spannungsversorgung eines elektrischen Verbrauchers.

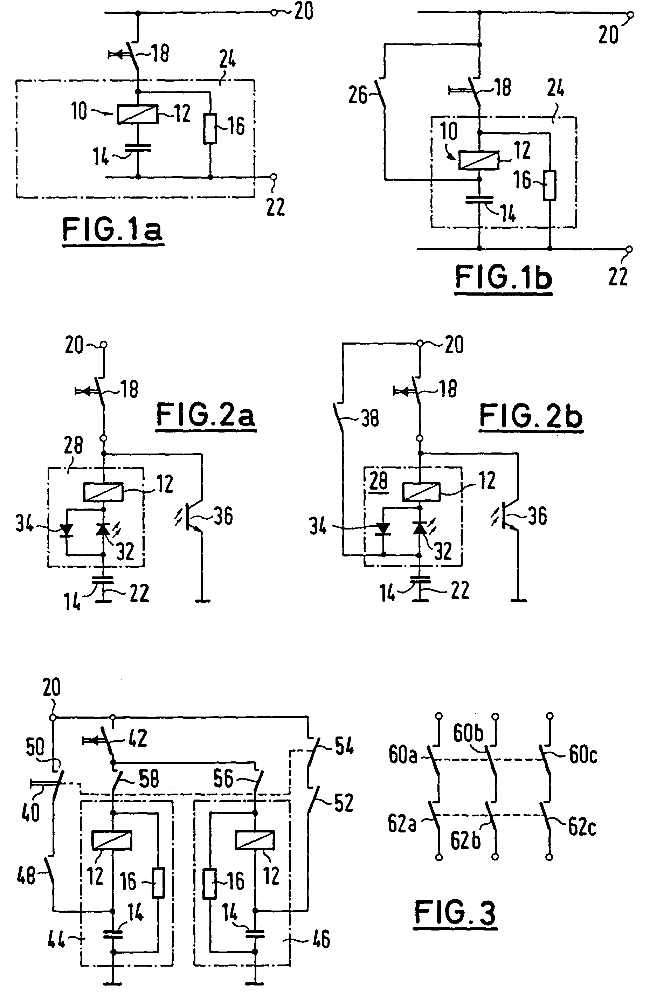

Die Schaltungsanordnung gemäß Fig.1a enthält als Schaltungsteil, das auf einen Strom vorgegebener Richtung einen ersten von zwei Zuständen einnimmt; ein gepoltes Relais 10, dessen Spule 12 in Reihe mit einem Kondensator 14 angeordnet ist. Zu der Reihenschaltung aus Kondensator 14 und Spule 12 ist ein Widerstand 16 parallel geschaltet. Die Spule 12 und der eine Anschluß des Widerstands 16 sind mit einem Anschluß eines Schalters 18, insbesondere eines Tastschalters verbunden, dessen anderer Anschluß mit einem Pol 20 einer Gleichspannungsquelle verbunden ist. Es handelt sich bei dem Pol 20 um den positiven Pol. Der negative Pol 22 der Gleichspannungsquelle ist mit dem anderen Anschluß des Widerstandes 16 und dem Kondensator 14 verbunden. Das gepolte elektromagnetische Relais 10 ist so an die positive Spannung des Pols 20 gelegt, dass der von einem nicht dargestellten Dauermagneten erzeugte Fluß durch den vom Spulenstrom erzeugten Fluß unterstützt wird. Der nicht dargestellte Anker des Relais 10 bleibt daher in seiner einen stabilen Endlage, wenn der Spulenstrom von der über den Schalter 18 von außen an die aus dem Relais 12, dem Kondensator 14 und dem Widerstand 16 bestehende Schaltungsgruppe 24 angelegt wird. Die Spannung der Gleichspannungsquelle lädt über den Schalter 18 den Kondensator 14 auf. Die Nennspannung des Relais 10 ist auf die Gleichspannung der Spannungsquelle abgestimmt oder umgekehrt die Gleichspannung auf die Nennspannung des Relais. Bei dem Schalter 18 kann es sich um einen Tastschalter handeln.

Wird der Schalter 18 geöffent oder fällt die Gleichspannung aus anderen Gründen aus, reagiert die Schaltungsgruppe 24, indem sich der Kondensator 14 über die Spule des Relais 12 und den Widerstand 16 entlädt. Die Dauer der Entladung hängt von der Kapazität des Kondensators 14 und der Impedanz der Spule 12 und der Größe des Widerstands 16 ab. Bei der Entladung kehrt sich die Stromrichtung in der Spule 12 gegenüber der Stromrichtung des von der Gleichspannungsquelle erzeugten Stroms um, wodurch der vom Spulenstrom erzeugte Fluß dem Fluß des Dauermagneten im Relais 10 entgegenwirt. Deshalb wird das Relais 10 betätigt, d.h. der Anker wechselt von der einen stabilen Endlage in die andere über. Die im Kondensator 12 gespeicherte Energie reicht aus, um das Relais 10 für eine bestimmte Zeit in dieser Endlage zu halten. Wenn der Entladestrom unter den Haltestrom abgesunken ist, wechselt der Relaisanker wiederum seine Endlage. Die Schaltung 24 eignet sich besonders für sicherheitstechnische Einsätze, um beispielsweise zu verhindern, dass nach einem kurzzeitigen Spannungsausfall an einem elektrischen Verbraucher sofort wieder die volle Spannung ansteht. Für manche technischen Prozesse ist dies nicht günstig oder für das Personal gefährlich.

Die in Fig. 1b dargestellte Schaltungsanordnung unterscheidet sich von der Schaltung gemäß Fig. 1a nur darin, dass ein Schließer 26 bzw. Schließkontakt des Relais 14 einerseits an die gemeinsame Verbindungsstelle von Spule 12 und Kondensator 14 und andererseits an den Pol 20 gelegt ist. In den Figuren 1a und 1b sind gleiche Elemente mit den gleichen Bezugsziffern versehen.

Die in Fig. 1a und 1b dargestellte Anordnung ist in sicherheitstechnischem Sinn insofern sicher, als ein Defekt eines beliebigen Elements der Schaltung zum absichtlichen funktionalen Versagen der Schaltung führt. Bei defektem Kondensator 14 (Kurzschluß oder Unterbrechung) kann dieser keine Energie mehr speichern, so dass keine Entladung möglich ist, nachdem der Schalter 18 betätigt wurde. Ein Defekt des Widerstandes 16, resultierend aus einer Unterbrechung, verhindert, dass sich der Kondensator 14 entladen kann. Im Falle eines Kurzschlusses über den Widerstand 16 kann sich der Kondensator 14 nicht aufladen, wenn der Schalter 18 geschlossen ist. Eine Überbrückung des Schalters 18 führt im Moment der Spannungsbeaufschlagung nicht zum Ansprechen des Relais 12, da der Kondensator 14 nicht entladen wird.

Bei der in Fig. 2a dargestellten Anordnung ist das auf einen Strom vorgegebener Richtung einen ersten Schaltzustand einnehmendes Schaltungsteil 28 ein gepoltes Relais 30 in Serie mit einer Leuchtdiode 32 eines Optokopplers und eine zu der Leuchtdiode 32 parallel geschaltete Diode 34. Die Leuchtdiode 32 ist in Bezug auf den positiven Pol 20 der Spannungsquelle in Sperrichtung gepolt. Die Diode 34 ist in Bezug auf den Pol 20 in Durchlaßrichtung gepolt. Das Schaltungsteil 28 ist in Reihe mit dem Kondensator 14 und dem Tastschalter 18 zwischen den Polen 20, 22 angeordnet. Parallel zum Schaltungsteil 28 und dem Kondensator ist der Phototransistor 36 des Optokopplers gelegt. Die Anordnung gemäß Fig. 2a kann einen Schließer des Relais aufweisen. Eine solche Schaltung ist in Fig. 2b gezeigt. Gemäß Fig. 2b ist die Anode der Leuchtdiode 32 über einen Schließer 38 des Relais 10 mit dem Pol 20 verbunden. Wenn der Schalter 18 geschlossen wird, lädt sich der Kondensator 14 über die Spule des Relais und die Diode 34 auf. Wenn der Tastschalter 18 geöffnet wird, dann entlädt sich der Kondensator 14 über die Leuchtdiode 32, die Relaisspule und den Transistor 36. Das Relais 10 geht deshalb in seinen anderen Schaltzustand über, der von weiteren Bauelementen ausgewertet wird, die z.B. mit einem Relaiskontakt angesteuert werden.

Bei einem defekten Bauteil der Schaltung gemäß Fig. 2a und 2b spricht das relais 10 nicht an. Wird die Diode 34 hochohmig, wird der Kondensator 14 nicht mehr aufgeladen. Bildet die Diode 34 ein Kurzschluß, dann fließt über die Leuchtdiode 32 kein Strom, so dass der Transistor 36 nichtleitend ist. Eine Kondensatorentladung findet dann nicht statt. Ist die Leuchtdiode 32 defekt, dann wird der Transistor 36 nicht mehr leitend gesteuert. Ist der Transistor 36 kurzgeschlossen, dann wird der Kondensator 14 nicht aufgeladen. Ist dagegen der Transistor 36 hochohmig, dann unterbleibt die Kondensatorentladung, die für das Anziehen des Relais 10 notwendig ist.

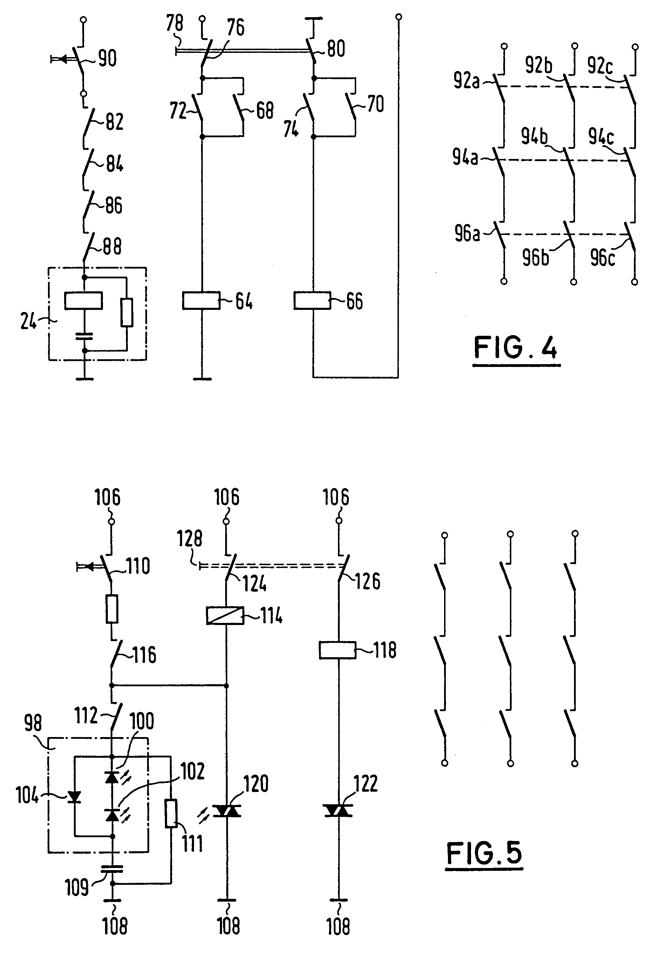

Die Fig. 3 zeigt eine Schaltungsanordnung mit einem Ein-Taster 42 und einen Not-Aus-Schalter 40. Die Baugruppe ist für die Freigabe der Spannung an einen Verbraucher, z.B. eine Arbeitsmaschine, bestimmt. Die Schaltungsanordnung gemäß Fig. 3 enthält eine erste Schaltungsgruppe 44 und eine zweite Schaltungsgruppe 46, die im Aufbau z.B. der Schaltungsgruppe 14 gemäß Fig. 1a entsprechen. Es können aber auch Schaltungsgruppen mit Schaltungsteilen 28 und Transistoren 36 vorgesehen sein, wie sie in Fig. 2a und 2b gezeigt sind.

Die Schaltungsgruppe 44 weist einen Schließer 48 des zugehörigen gepolten Relais auf, der in Reihe mit einem ersten Kontakt 50 des Not-Aus-Schalters 40 zwischen dem Pol 20 der Spannungsquelle und dem einen Anschluß des Kondensators 14 angeordnet ist. Ebenso enthält die Schaltungsgruppe 46 einen Schließer 52, der in Reihe mit dem zweiten Kontakt 54 des Not-Aus-Schalters 40 zwischen dem Pol 20 und dem einen Anschluß des Kondensators 14 der Baugruppe 46 angeordnet ist. Weiterhin enthält die Baugruppe 44 einen Öffner 56 des zugehörigen Relais. Der Öffner 56 ist in Reihe mit der Baugruppe 46 dem Ein-Taster 42 nachgeschaltet. Zwischen dem Ein-Taster 42 und der Baugruppe 44 ist weiterhin ein Öffner 58 des der Baugruppe zugehörigen Relais 10 angeordnet. Weitere Schließer 60a, 60b, 60c des Relais der Baugruppe 44 und Schließer 62a, 62b, 62c des Relais der Baugruppe 46 sind je in Reihe gelegt und zwischen einer nicht gezeigten, z.B. dreiphasigen Spannungsquelle und einem dreiphasigen Verbraucher wie Motor angeordnet.

Beim Loslassen des Ein-Tasters 42 schließen die Schließer 60a, 60b, 60c und 62a, 62b, 62c nur dann, wenn die Schaltungsanordnung gemäß Fig. 3 einwandfrei arbeitende Bauelemente hat. Störungen an oder Defekte von Bauteilen der Schaltung verhindern das Schließen bzw. die Freigabe der Spannung für den Verbraucher. Die Selbsthaltung der Baugruppen 44, 46 bewirkt, dass die Spannung am Verbraucher nach der Freigabe erhalten bleibt.

Beim Öffnen der mechanisch zwangsweise verbundenen Kontakte 59, 54 des Not-Aus-Schalters 40 wird die Selbsthaltung des Relais mit erbrochen und die Freigabe erlischt. Um die Anordnung wieder starten zu können, müssen die Relais beider Schaltungsgruppen vorher abgefallen sein, damit die Öffner 56, 58 geschlossen sind.

Die Fig. 4 zeigt eine Schaltungsanordnung mit einer Schaltungsgruppe 24 aus dem Relais 10, dem Widerstand 16 und dem Kondensator 14, bei der zwei weitere gepolte Relais 64, 66 vorgesehen sind. Das Relais 10 hat zwei Schließer 68, 70, die jeweils parallel zu einem Schließer 72, 74 des Relais 66 bzw. 64 geschaltet sind. In Reihe mit dem Schließer 72 bzw. 68 und der Spule des Relais 64 ist ein erster Kontakt 76 eines Not-Aus-Schalters 78 zwischen den nicht näher bezeichneten Polen einer Spannungsquelle angeordnet. In Reihe mit dem Schließer 74 bzw. 70 ist ein zweiter Kontakt 80 des Not-Aus-Schalters 78 und die Spule des Relais 66 angeordnet. Jedes Relais 64, 66 hat noch zwei Schließer 82, 84 bzw. 86, 88, die in Reihe mit einem Start-Tastschalter 90 zu der Schaltungsgruppe 24 angeordnet sind.

Weitere Schließer 92a, 92b, 92c und 94a, 94b, 94c der jeweiligen Relais 64, 66 sind in Reihe zueinander und mit Öffnern 96a, 96b, 96c, in einem Freigabestromkreis angeordnet, der eine nicht dargestellte Spannungsquelle und einen elektrischen Verbraucher enthält.

Die Schaltungsanordnung gemäß Fig. 4 soll für die Freigabe die gleiche Aufgabe erfüllen wie die in Fig. 3 dargestellte Schaltung. Nach dem Loslassen des Ein-Tastschalters 90 zieht das Relais 10 der Schaltungsgruppe 24 an, wodurch die Relais 64 und 66 an Spannung gelegt werden, und sich nach dem Anziehen selbst halten. Hierdurch fällt das Relais der Schaltungsgruppe 24 ab, d.h. das Relais führt eine Wischerfunktion aus.

Die Fig. 5 zeigt eine Schaltungsanordnung, bei der ein Schaltungsteil 98, das auf einen Strom vorgegebener Richtung einen ersten von zwei Zuständen einnimmt aus zwei in Reihe geschalteten Leuchtdioden 100, 102 von zwei Optokopplern mit Triacausgängen und einer Diode 104 besteht, die zu den beiden Leuchtdioden 100, 102 parallel geschaltet ist. Die Leuchtdioden 100, 102 sind in Bezug auf den positiven Pol 106 einer Gleichspannungsquelle in Sperrichtung gepolt. Die Diode 104 ist in Bezug auf den positiven Pol 106 in Durchlaßrichtung gepolt. In Reihe mit den Leuchtdioden 100, 102 sind zwischen dem positiven Pol 106 und dem negativen Pol 108 ein Ein-Tastschalter 110 eine nicht näher bezeichnete Sicherung und zwei Schließer 112, 116 von zwei gepolten Relais 114, 118 sowie ein Kondensator 109 angeordnet. Die Spulen der Relais 114, 118 sind je in Reihe mit Triacs 120, 122 und Kontakten 124, 126 eines Not-Aus-Schalters 128 zwischen den Polen 106, 108 angeordnet. Die Relais 114, 118 weisen jeweils weitere, nicht näher bezeichnete Schließerkontakte auf, die in einem Freigabestromkreis zwischen einem nicht dargestellten elektrischen Verbraucher und einer nicht dargestellten Stromquelle angeordnet sind. Die Spule des Relais 114 ist an die gemeinsame Verbindungsstelle der Schließer 116, 112 angeschlossen. Ein Widerstand 111 liegt parallel zum Schaltungsteil 98 und zum Kondensator 109. Nach dem Loslassen des Ein-Tastschalters 110 entlädt sich der Kondensator 109, wodurch die Leuchtdioden 100, 102 Licht aussenden, das die zugehörigen Triacs 120 und 122 leitend steuert, wodurch die Relais 114 und 118 anziehen.

Nach dem Ansteuern der Triacs 120, 122 bleiben diese leitend, bis der Haltestrom z.B. durch Betätigung des Not-Aus-Schalters 128 unterschritten wird. Die Schaltung gemäß Fig. 5 erfüllt die gleichen Sicherheitskriterien wie die zuvor erörterten Schaltungen.

Statt der Triacausgänge können auch andere Ausgänge von photoelektrischen Bauelementen vorgesehen sein.

## Patentansprüche

1. Schaltungsanordnung, die auf eine abfallende Spannungsflanke anspricht,
**dadurch gekennzeichnet**,
dass ein Schaltungsteil (10, 28, 98), das auf einen Strom vorgegebener Richtung einen ersten von wenigstens zwei Zuständen einnimmt, in Reihe mit einem bei einem leitenden Schaltelement von einer äußeren Spannungsquelle aufladbaren Kondensator (14, 109) angeordnet ist und dass ein Entladestromkreis mit parallelem Zweig zum Kondensator und zum Schaltungsteil (10; 28; 98), einen Strom der vorgegebenen Richtung im Schaltungsteil (10; 28; 98) beim Öffnen des Schaltelements erzeugt, wodurch das Schaltungsteil in den ersten Zustand versetzt wird, der von weiteren Schaltungselementen weiterverarbeitet wird.

2. Schaltungsanordnung nach Anspruch 1,
**dadurch gekennzeichnet**,
dass als Schaltungsteil wenigstens ein gepoltes Relais (10) mit seiner Spule (12) in Reihe mit einem Kondensator (14) angeordnet ist, dass zu der Reihenschaltung von Spule (12) und Kondensator (14) ein Widerstand (16) parallel geschaltet ist und dass die Polung des Relais (10) derart auf die an die Reihenschaltung von Spule (12) und Kondensator (14) von einer äußeren Spannungsquelle anlegbare Spannung abgestimmt ist, dass der von der äußeren Spannungsquelle erzeugte Spulenstrom das Relais nicht betätigt, das bei der Kondensatorentladung betätigt wird.

3. Schaltungsanordnung nach Anspruch 1,
**dadurch gekennzeichnet**,
dass ein gepoltes Relais (12) mit einer Leuchtdiode (32) eines Optokopplers und mit dem Kondensator (14) in Reihe geschaltet ist, dass die Leuchtdiode (32) in Bezug auf die äußere Spannungsquelle in Sperrichtung und eine zu der Leuchtdiode (32) parallele Diode (34) in Durchlaßrichtung gepolt ist und dass ein Phototransistor des Optokopplers parallel zu der Reihenschaltung aus Spule (12) des Relais, Leuchtdiode (32) und Kondensator (14) im Entladestromkreis angeodnet ist.

4. Schaltungsanordnung nach Anspruch 1,
**dadurch gekennzeichnet**,
dass als Schaltungsteil (98) wenigstens ein Optokoppler mit Triacausgang vorgesehen ist, dessen Leuchtdiode (100; 102) in Bezug auf die Polarität der äußeren Spannungsquelle in Sperrichtung gepolt ist, dass eine in Bezug auf die Polarität der äußeren Spannungsquelle in Durchlaßrichtung gepolte Diode (104) parallel zur Leuchtdiode (100, 102) angeordnet ist, und dass ein Widerstand (111) parallel zur Leuchtdiode (100, 102) und zum Kondensator (109) angeordnet ist.

5. Schaltungsanordnung nach einem oder mehreren der vorhergehenden Ansprüche,
**dadurch gekennzeichnet**,
dass die Reihenschaltung des Schaltungsteils (16, 28, 98) und des Kondensators (14, 109) über das als Tastschalter (18, 42, 80, 110) ausgebildete Schaltelement zwischen dem positiven und negativen Pol (20, 22) der äußeren Spannungsquelle angeordnet ist.

6. Schaltungsanordnung nach Anspruch 1, 2 oder 3,
**dadurch gekennzeichnet**,
dass das Relais (10) einen Schließer (26, 38) enthält, der in einem Selbsthaltekreis mit dem einen Pol (20) der Spannungsquelle und der Spule (12) des Relais (10) verbunden ist.

7. Schaltungsanordnung nach einem oder mehreren der vorhergehenden Ansprüche,
**dadurch gekennzeichnet**,
dass zwei, je die Reihenschaltung eines gepolten Relais (10) und eines Kondensators (14) und einen zur Reihenschaltung parallelen Widerstand (16) aufweisende Schaltungsgruppen (44, 46) über je einen Schließer (58, 56) des Relais der jeweils anderen Schaltungsgruppe (46, 44) mit einem Pol eines Tastschalters (42) verbunden sind, dessen anderer Pol an den einen Pol (20) der Gleichspannungsquelle angeschlossen ist, dass jedes Relais mit seiner Spule (12) über einen Schließer (48, 52) und einen Kontakt (50, 54) eines Not-Aus-Schalters (40) mit dem Pol (20) der Gleichspannungsquelle verbunden ist, dass die beiden Kontakte (50, 54) des Not-Aus-Schalters (40) mechanisch zwangsläufig betätigbar sind und dass Schließer (60a, 62a) der Relais in Reihe zwischen einer Spannungsquelle und einem Verbraucher angeordnet sind.

8. Schaltungsanordnung nach einem oder mehreren der vorhergehenden Ansprüche,
**dadurch gekennzeichnet**,
dass eine die Reihenschaltung eines gepolten Relais und eines Kondensators und einen zu der Reihenschaltung parallelen Widerstand aufweisende Schaltungsgruppe (24) wenigstens über je einen Schließer (82, 86) zweier weiterer gepolter Relais (64, 66) und über einen Tastschalter (80) mit dem einen Pol (20) der Gleichspannungsquelle verbunden ist, dass jedes der weiteren Relais (64, 66) in Reihe mit der Parallelschaltung eines eigenen Schließers (72, 74) und eines Schließers (68, 70) der Schaltungsgruppe (24) und in Serie mit einem Kontakt (76, 80) eines Not-Aus-Schalters (78) dessen Kontakte (76, 80) zwangsläufig mechanisch gekoppelt sind, an die Spannungsquelle (20) angeschlossen sind.

9. Schaltungsanordnung nach Anspruch 4,
**dadurch gekennzeichnet**,
dass ein Schaltungsteil (98) mit zwei Leuchtdioden (100, 102) in Reihe mit einem Kondensator (109) und je einem Schließer von zwei gepolten Relais (114, 118) und mit einem Tastschalter (110) an die äußere Spannungsquelle angeschlossen ist, dass ein Widerstand (111) parallel zum Schaltungsteil (98) und zum Kondensator (109) gelegt ist, dass die Spulen der Relais (114, 118) je in Reihe mit Triacausgängen (120, 122) der Leuchtdioden (100, 102 und Kontakten (124, 126) eines Not-Aus-Schalters (128) angeordnet sind und dass die Spule des einen Relais (114) an die gemeinsame Verbindungsstelle der Schließer (116, 112) vor dem Schaltungsteil (74) angeschlossen ist.
